# EUROPÄISCHE PATENTSCHRIFT

(11) **EP 2 651 205 B1**
(45) Veröffentlichungstag und Bekanntmachung des Hinweises auf die Patenterteilung: **23.10.2019**
(21) Anmeldenummer: 11833601.5
(22) Anmeldetag: 16.12.2011
(51) Int. Cl.: A01B 21/08

(54) **BODENBEARBEITUNGSGERÄT**
SOIL WORKING IMPLEMENT
APPAREIL DE TRAVAIL DU SOL

(30) Priorität: 17.12.2010 DE 102010054945
(43) Veröffentlichungstag der Anmeldung: 23.10.2013
(73) Patentinhaber: Lemken GmbH & Co. KG, 46519 Alpen (DE)
(72) Erfinder: ACHTEN, Georg, 47918 Tönisvorst (DE); TERBOVEN, Johannes, 46519 Alpen (DE)
(86) Internationale Anmeldenummer: PCT/DE2011/002153
(87) Internationale Veröffentlichungsnummer: WO 2012/089193

(56) Entgegenhaltungen:
- WO-A1-00/04755
- WO-A2-2008/033091
- GB-A- 1 450 535
- US-B1- 7 048 069

## Beschreibung

Die Erfindung bezieht sich auf ein Bodenbearbeitungsgerät mit einem Rahmen mit zwei hintereinander und quer angeordneten Rahmenteilen, an denen nebeneinander drehbar gelagerte Hohlscheiben angeordnet sind, die über Tragarme mit den Rahmenteilen verbunden sind, wobei die Hohlscheiben des in Arbeitsrichtung gesehen vorderen Rahmenteils mit den konkaven Seiten in Arbeitsrichtung schräg nach vorn und nach außen weisen und die Hohlscheiben des in Arbeitsrichtung gesehen hinteren Rahmenteils mit den konkaven Seiten in Arbeitsrichtung schräg nach vorn und zur Mitte weisen und wobei die Sehnen der konkaven Seiten der Hohlscheiben mit der Bodenoberfläche einen stumpfen Winkel einschließen.

Ein derartiges Bodenbearbeitungsgerät ist aus der amerikanischen Patentschrift US 1 944 275 bekannt. Bei deren Gegenstand handelt es sich um ein gezogenes Bodenbearbeitungsgerät mit einem Rahmen mit zwei Rahmenteilen, an denen Hohlscheiben mit separaten Lagerungen nebeneinander angeordnet sind. Die Hohlscheiben des vorderen Rahmenteils sind mit den konkaven Seiten schräg nach vorn und nach außen weisend und die Hohlscheiben des hinteren Rahmenteiles sind schräg nach vorn und zur Mitte weisend angeordnet. Bei dieser Lösung wird der Bearbeitungsstreifen zwischen den beiden vorderen Hohlscheiben im mittleren Bereich des Bodenbearbeitungsgerätes nicht bearbeitet, was einen ungleichmäßig bearbeiteten Acker hinterlässt, bei dem für die nachfolgenden Arbeitsgänge ein erhöhter Bearbeitsaufwand erforderlich wird, wenn keine Ertragseinbußen in Kauf genommen werden sollen.

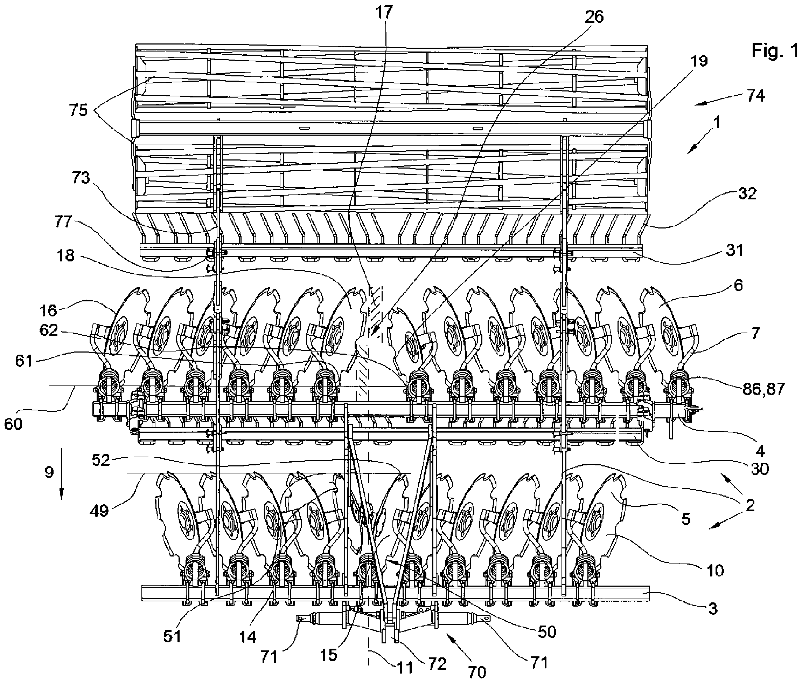

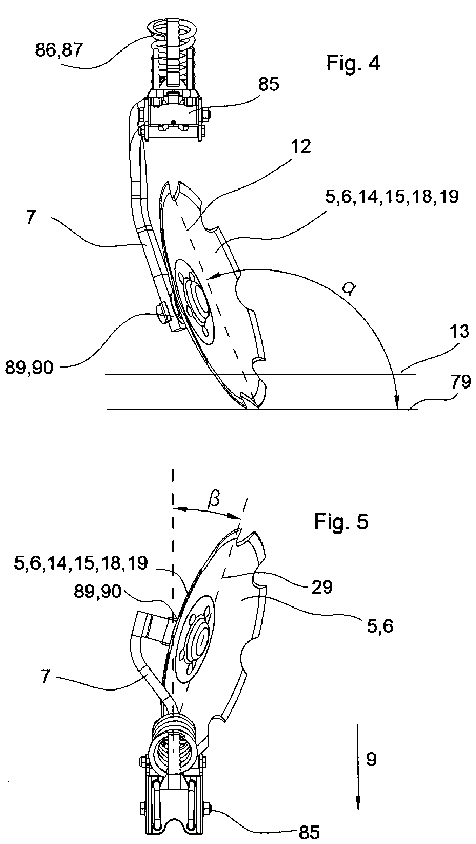

Der europäischen Patentanmeldung EP 1 449 419 ist ebenfalls ein Bodenbearbeitungsgerät mit einem Rahmen mit zwei Rahmenteilen zu entnehmen, an denen Hohlscheiben mit separaten Lagerungen nebeneinander angeordnet sind. Die Hohlscheiben des vorderen Rahmenteiles sind mit den konkaven Seiten schräg nach vorn und nach außen weisend und die Hohlscheiben des hinteren Rahmenteiles sind schräg nach vorn und zur Mitte weisend angeordnet. Der Figur 1 ist dabei eine Lösung zu entnehmen, bei der die Winkel der mittleren Hohlscheiben so geändert wurden, dass auch im mittleren Bereich des Bodenbearbeitungsgerätes der Boden bearbeitet wird. Dazu wurde der stumpfe Winkel der Sehnen der konkaven Seite der Hohlscheiben zur Bodenoberfläche so geändert, dass er nicht mehr stumpf sondern spitz ist. Die mittleren Hohlscheiben stehen daher nicht mehr auf Griff und können nicht mehr in den Boden einziehen. Sie erzeugen einen Auftrieb, der nur durch das Gewicht des Gerätes und das Einzugsverhalten der restlichen Hohlscheiben überwunden werden kann. In härteren Bodenverhältnissen kann dieser Auftrieb der mittleren Hohlscheiben nicht ausreichend überwunden werden, auch nicht mit erhöhtem Gewicht. Dies führt dazu, dass eine üblicherweise mögliche angestrebte Arbeitstiefe nicht mehr erreicht wird. Dies schränkt den Einsatz des Bodenbearbeitungsgerätes erheblich ein, erst recht, wenn die Hohlscheiben nach längerem Einsatz schon etwas verschlissen sind und sich dadurch der Durchmesser aller Hohlscheiben reduziert. Die Figur 4 der EP 1 449 419 zeigt eine Lösung, bei der die vorne im mittleren Bereich angeordneten Hohlscheiben in der Winkelstellung nicht verändert wurden. Vielmehr wird hier der nicht bearbeitete Bearbeitungsstreifen zwischen diesen Hohlscheiben der vorderen Reihe von den Hohlscheiben der hinteren Reihe bearbeitet. Wegen der Freiraumprobleme wurde eine der beiden hinteren Hohlscheiben, die mit ihren konkaven Seiten zueinander weisend angeordnet sind, in Arbeitsrichtung nach vorne versetzt angeordnet. Diese Ausführungsform sichert zwar eine relativ gleichmäßige Bearbeitung des Bodens, die aber bei weitem nicht ausreichend ist und nur in Verbindung mit sehr kleinen und sehr steil stehenden Hohlscheiben möglich ist. Auch Verstopfungsprobleme im vorderen Bereich des Gerätes, insbesondere bei viel Bewuchs und größeren Arbeitstiefen können so nicht wirkungsvoll vermieden werden. Aus der WO 00/04755 ist ebenfalls ein gattungsgemäßes Bodenbearbeitungsgerät bekannt. Dieses Gerät weist einen vorderen Rahmenteil mit Hohlscheiben auf, deren konkave Seiten in Arbeitsrichtung schräg nach vorne und nach außen weisen und mit einem hinteren Rahmenteil, dessen Hohlscheiben mit den konkaven Seiten in Arbeitsrichtung schräg nach vorne und zur Mitte weisen. Außerdem weisen die vorderen, mittleren Hohlscheiben des Rahmenteils mit ihren konvexen Seiten zueinander und sind unterschiedlich dimensioniert.

Die bekannten Lösungen haben den Nachteil, dass der Boden nicht über die gesamte Arbeitsbreite gleichmäßig bearbeitet wird, dass Verstopfungen aus Freiraumproblemen nicht verhindert werden können und dass der Bodenfluss nicht optimal geführt wird. Dies hat in der Regel die Konsequenz, dass der Boden nachträglich nochmals bearbeitet werden muss, um einen gleichmäßig bearbeiteten Acker bzw. ein ausreichend gutes Saatbett zu erhalten.

Aufgabe der Erfindung ist es, ein entsprechendes Bodenbearbeitungsgerät zu schaffen, das für große Arbeitsgeschwindigkeiten geeignet ist, bei dem die Werkzeuge gleichmäßig über die Arbeitsbreite verteilt sind und den Boden gleichmäßig bearbeiten, das einfach und besonders kompakt aufgebaut ist und das auch verstopfungsfrei arbeitet.

Erfindungsgemäß wird die Aufgabe nach den Merkmalen des Anspruchs 1 gelöst, wobei in den weiteren Patentansprüchen in vorteilhafter Weise ergänzende und alternative Lösungen beansprucht werden.

Durch den Einsatz einer kleineren Hohlscheibe im mittleren Bereich des vorderen Rahmenteils können mit dieser einen Ausnahme auch größere Hohlscheiben mit stabilen Lagerungen mit geringem seitlichen Abstand zueinander unter Beibehaltung des vorgegebenen optimalen stumpfen Winkels zur Bodenoberfläche angeordnet werden, ohne Einbußen bei der Effektivität in Kauf nehmen zu müssen und ohne die Gefahr, dass Verstopfungen auftreten können. In einer Zeit, wo Intensität und Flächenleistung unverzichtbar sind, müssen auch die ackerbaulichen und pflanzlichen Belange Berücksichtigung finden. Mit der erfindungsgemäßen Lösung kann dies in besonderer Weise umgesetzt werden. Die Erfindung sieht weiter vor, dass eine der beiden Hohlscheiben zu der anderen Hohlscheibe versetzt angeordnet ist und der Versatz zwischen diesen Hohlscheiben so bemessen ist, dass die eine Hohlscheibe vorzugsweise mit ihrer Hinterkante annähernd auf einer Linie liegt mit der Hinterkante der anderen Hohlscheibe bzw. den Hinterkanten der restlichen Hohlscheiben des vorderen Rahmenteils. Dadurch dass praktisch alle Hinterkanten aller Hohlscheiben des vorderen Rahmenteils auf einer Linie liegen, bleibt der Abstand zu den Hohlscheiben gleich, die sich dahinter am hinteren Rahmenteil befinden.

Die Erfindung sieht weiter vor, dass die Sehne der konkaven Seite der im Durchmesser kleineren Hohlscheibe mit der Bodenoberfläche einen stumpfen Winkel α einschließt, der kleiner ist als der Winkel α der anderen Hohlscheiben des vordern Rahmenteils. Durch eine andere Winkelstellung wird etwas mehr Freiraum erzielt, der den Einsatz auch größerer Lagerungen ermöglicht, ohne die Gefahr, dass Bauteile kollidieren können.

Zur Vermeidung von Verstopfungen ist daran gedacht, dass die beiden Hohlscheiben, die im mittleren Bereich des hinteren Rahmenteils angeordnet sind mit ihren konkaven Seiten zueinander weisen und dass eine der beiden Hohlscheiben einen um mindestens 20 % kleineren Durchmesser aufweist als die andere Hohlscheibe und in Arbeitsrichtung zu der anderen Hohlscheibe vorzugsweise nach vorne versetzt angeordnet ist. Durch das Vorsehen einer deutlich kleineren Hohlscheibe wird ausreichend Freiraum geschaffen, der sicherstellt, dass zwischen den beiden Hohlscheiben, die mit ihren konkaven Seiten zueinander weisen, keine Verstopfungen auftreten können. Je nach Größe der Hohlscheiben kann der Durchmesser der kleineren Hohlscheibe auch etwas größer gewählt sein, z. B. nur 15 % kleiner als der Durchmesser der anderen Hohlscheibe.

Der Versatz der Hohlscheibe ist so bemessen, dass die Hohlscheibe mit dem kleineren Durchmesser in Draufsicht gesehen mit ihrer Vorderkante annähernd auf einer Linie liegt mit den Vorderkanten der anderen Hohlscheiben. Dadurch wird ein gleicher Abstand zwischen den Hohlscheiben des vorderen Rahmenteils und den Hohlscheiben des hinteren Rahmenteils erzielt. Der für eine verstopfungsfreie Arbeit erforderliche Freiraum wird jeweils durch den Einsatz einer kleineren Hohlscheibe am jeweiligen Rahmenteil erreicht.

Die Erfindung sieht weiter vor, dass für breit arbeitende oder einklappbare Bodenbearbeitungsgeräte sowohl das vordere Rahmenteil als auch das hintere Rahmenteil mehrteilig ausgebildet ist. Geräte, die mit einer geringen Arbeitsbreite eingesetzt werden, brauchen jeweils nur ein vorderes und ein hinteres Rahmenteil. Bei Geräten mit größerer Arbeitsbreite sieht die Erfindung vor, dass sowohl das vordere Rahmenteil als auch das hintere Rahmenteil mehrteilig ausgebildet ist, um so eine gute Bodenanpassung der einzelnen Hohlscheiben zu gewährleisten. Das gleiche gilt auch für einklappbare Bodenbearbeitungsgeräte. Dass bei Bedarf im Einzelfall auch Bodenbearbeitungsgeräte mit geringer Arbeitsbreite mehrteilige Rahmenteile aufweisen können, schließt die Erfindung nicht aus.

Ein Vorschlag für die Verteilung der Hohlscheiben über das komplette Bodenbearbeitungsgerät sieht vor, dass die Anzahl der an dem Bodenbearbeitungsgerät vorgesehenen Hohlscheiben bei einer geraden, nicht durch vier teilbaren Zahl liegt. Im Wesentlichen entspricht einer solchen Anordnung ein Gerät mit einer geraden Anzahl von Hohlscheiben in der vorderen Reihe und einer um zwei Scheiben erhöhten Anzahl in der hinteren Reihe. Es kommt dabei vorteilhafterweise zu einer Verschiebung der Symmetriemitte der Hohlscheiben um z. B. einen halben Scheibenabstand. Damit ist praktisch ein symmetrisch belastetes Gerät mit ausgewogener Kräfteverteilung geschaffen, bei dem kein Seitenzug oder kein schiefer Nachlauf auftreten kann, wenn links und rechts von der Gerätemitte die gleiche Anzahl von Hohlscheiben sowohl am vorderen Rahmenteil als auch am hinteren Rahmenteil angeordnet ist und z. B. vorne Erdreich von der Mitte nach außen fördern oder hinten Erdreich von außen in Richtung der Gerätemitte fördern.

In Ergänzung zu den bisherigen Maßnahmen ist vorgesehen, dass den Hohlscheiben des vorderen Rahmenteils bzw. der vorderen Rahmenteile und/oder des hinteren Rahmenteils bzw. der hinteren Rahmenteile Niederhalter zugeordnet sind, die hinter den Hohlscheiben angeordnet sind. Diese Niederhalter sind so konzipiert, dass sie den von den Hohlscheiben abgeschälten Boden so führen, dass die nachfolgenden Hohlscheiben, die an den hinteren Rahmenteil angeordnet sind, nicht behindert werden. Das von den Hohlscheiben des vorderen Rahmenteils abgeschälte und seitlich geworfene Erdreich wird von den Niederhaltern aufgefangen und abgelegt. Das Zuordnen von Niederhaltern hinter den Hohlscheiben des hinteren Rahmenteils verhindert, dass nachfolgende Werkzeuge, wie z.B. eine Walze, durch das abgeschälte und aufgeworfene Erdreich behindert werden. Insbesondere bei hohen Arbeitsgeschwindigkeiten ist es nicht möglich, abgeschälten Boden so zu führen, dass nachfolgende Werkzeuge nicht behindert werden. Durch den Niederhalter wird das abgeschälte Erdreich quasi so beruhigt und abgelegt, dass nachfolgende Werkzeuge wie vorgesehen ungehindert ihre Funktion ausüben können. Bei der Variante der Erfindung, bei der sowohl den Hohlscheiben des vorderen Rahmenteils bzw. der vorderen Rahmenteile als auch den Hohlscheiben des hinteren Rahmenteils bzw. der hinteren Rahmenteile Niederhalter zugeordnet sind, die jeweils hinter den Hohlscheiben angeordnet sind, wird grundsätzlich sichergestellt, dass die Werkzeuge, die jeweils hinter einem Niederhalter angeordnet sind, nicht durch den von den Hohlscheiben erzeugten Erdstrom behindert werden und von daher den beabsichtigten Bodenbearbeitungseffekt erreichen.

Es ist weiter vorgesehen, dass die Niederhalter als einteilige oder mehrteilige Abschirmelemente ausgebildet sind, die den von den Hohlscheiben abgeschälten Boden aufnehmen und wieder auf die Bodenoberfläche ablegen, wobei die Abschirmelemente vorzugsweise aus Metall oder Kunststoff und z. B. durch Wahl ihres Querschnitts elastisch ausgebildet sind. Dadurch, dass die Niederhalter bzw. die Abschirmelemente elastisch ausgebildet sind, kann auch in klebrigen Bodenverhältnissen das Erdreich nicht anhaften. Durch das Nachgeben bzw. durch die Bewegung dieser Bauteile fällt aufgefangener Boden sofort wieder ab und wird abgelegt.

Die Erfindung sieht weiter vor, dass als Niederhalter bzw. als Abschirmelemente Leitteile, Zinken oder zum Beispiel auch Striegelzinken vorgesehen sind, die den von den Hohlscheiben abgeschälten und seitlich verschobenen Boden zumindest zum Teil wieder in die entgegengesetzte Richtung umleiten. Der Boden der ersten Hohlscheibenreihe wird zum Beispiel nach außen gefördert und der Boden, der von den hinteren Hohlscheibenreihen bearbeitet wird, wird zur Mitte gefördert. Im Randbereich des Arbeitsbereiches des Bodenbearbeitungsgerätes können dadurch Rillen oder Furchen verbleiben. Der von den Niederhaltern bzw. den Leitteilen aufgefangene Boden wird daher so seitlich zurückgeführt, dass auch die im äußeren Bereich von den äußersten Hohlscheiben erzeugten Rillen und Furchen wieder mit Boden gefüllt werden und egalisiert werden.

Weitere Einzelheiten der Erfindung sind den Figuren und der Figurenbeschreibung zu entnehmen. Es zeigen:
- Figur 1: eine Draufsicht des Bodenbearbeitungsgerätes,
- Figur 2: eine Vorderansicht des Bodenbearbeitungsgerätes,
- Figur 3: eine Seitenansicht des Bodenbearbeitungsgerätes,
- Figur 4: eine Vorderansicht einer Hohlscheibeneinheit und
- Figur 5: eine Draufsicht auf die Hohlscheibeneinheit.

Figur 1 zeigt eine Draufsicht auf das Bodenbearbeitungsgerät 1. Das Bodenbearbeitungsgerät 1 kann ein angehängtes, ein aufgesatteltes oder ein angebautes Bodenbearbeitungsgerät 1 sein. Die Figur 1 zeigt die Ausführungsform eines angebauten Bodenbearbeitungsgerätes 1. Für den Anbau an das Dreipunktgestänge eines nicht dargestellten Traktors dient der Dreipunktturm 70. Der Dreipunktturm 70 weist dafür die Unterlenkeranlenkpunkte 71 und den Oberlenkeranbaupunkt 72 auf. Der Dreipunktturm 70 ist mit dem Rahmen 2 verbunden, der unter anderem aus einem vorderen Rahmenteil 3 und einem hinteren Rahmenteil 4 besteht. An dem vorderen Rahmenteil 3 sind die Hohlscheiben 5 angeordnet; an dem hinteren Rahmenteil 4 die Hohlscheiben 6. Von der Mitte 11 aus gesehen weisen die konkaven Seiten 10 der Hohlscheiben 5 in Arbeitsrichtung 9 gesehen schräg nach vorn und nach außen. In der Mitte 11 bzw. im mittleren Bereich 50 sind die Hohlscheiben 5, und zwar die Hohlscheiben 14 und 15, so angeordnet, dass sie mit ihren konvexen Seiten 16 zueinander weisen. Die einzelnen Hohlscheiben 5, 14 und 15 sind so angeordnet, dass ihre Sehnen 12 der jeweils konkaven Seite 10 einen stumpfen Winkel α zur Bodenoberfläche 13 einschließen. Dies ist insbesondere auch der Figur 4 zu entnehmen. Im mittleren Bereich 50 befindet sich die Hohlscheibe 14 und 15. Die Hohlscheibe 14 weist einen kleineren Durchmesser auf. Sie ist versetzt zur Hohlscheibe 15 angeordnet, um den Freirum in dem vorderen Bereich 50 zwecks Freiraum zu erhöhen. Der Versatz ist dabei auch so gewählt, dass die tragenden Bauteile der Hohlscheiben 14 und 15, nämlich die Tragarme 7, die Achsen 89 der Hohlscheiben 14 und 15 und die Lagerungen 90 nicht kollidieren können, auch dann nicht, wenn bei Überlastung eine der beiden Hohlscheiben 14 und 15 nach hinten und oben ausweicht. Über eine Feder 86, die Bestandteil einer Überlastsicherung 87 ist, wird die jeweilige Hohlscheibe 5, 14 und 15 in Arbeitsstellung gehalten. Am Rahmen 2 ist auch das hintere Rahmenteil 4 befestigt, das die Hohlscheiben 6 aufnimmt. Die Hohlscheiben 6 sind hier so angeordnet, dass sie mit ihren konkaven Seiten 10 in Arbeitsrichtung 9 schräg nach vorn und zur Mitte 11 weisen. Die Sehnen 12 der konkaven Seiten 10 der Hohlscheiben 6 schließen mit der Bodenoberfläche 13 einen stumpfen Winkel α ein. In der Mitte 11 des hinteren Rahmenteils 4 befinden sich die Hohlscheiben 18 und 19, die mit ihren konkaven Seiten zueinander weisen. Um in dem mittleren Bereich 26 zwischen diesen Scheiben 18 und 19 Verstopfungen zu vermeiden und den Erdfluss zu optimieren, weist die Hohlscheibe 19 einen kleineren Durchmesser auf und befindet sich in einer nach vorne versetzten Stellung.

In der dargestellten Ausführung befindet sich die Hinterkante 51 der Hohlscheibe 14 mit dem kleineren Durchmesser auf einer Linie 49 mit den Hinterkanten 52 der restlichen Hohlscheiben 5, 15 des vorderen Rahmenteils 3. Die Vorderkante 62 der Hohlscheibe 19 befindet sich auf einer Linie 60 mit den Vorderkanten 61 der Hohlscheibe 18 und der restlichen Hohlscheiben 6 des hinteren Rahmenteils 4. Zwischen den beiden Hohlscheiben 14 und 15, die am vorderen Rahmenteil 3 angeordnet sind, verbleibt ein unbearbeiteter Bearbeitungsstreifen 17. Dieser hier aus der Mitte heraus versetzte Bearbeitungsstreifen 17 wird von den beiden Hohlscheiben 18 und 19 bearbeitet. Insbesondere bei hoher Arbeitsgeschwindigkeit wird durch die Hohlscheiben 5 und 6 der Boden so aufgeworfen, dass nachfolgende Bodenbearbeitungswerkzeuge in ihrer Funktion behindert werden können. Um dies zu verhindern, befinden sich hinter den Hohlscheiben 5 die Niederhalter 30 und hinter den Hohlscheiben 6 die Niederhalter 31. Die Niederhalter 30 bzw. 31 bestehen hier aus Striegelzinken 32, die so angeordnet sind, dass sie den von den Hohlscheiben 5 und 6 seitlich bewegten Boden weitestgehend wieder in die entgegen gesetzte Richtung zurückführen. Der Rahmen 2 trägt nicht nur das vordere Rahmenteil 3 und das hintere Rahmenteil 4, sondern auch die Träger 73, an denen die Walze 74 befestigt ist. Die Walze 74 besteht in diesem Fall aus zwei Walzenkörpern 75. Je nach Bodenart und gewünschtem Arbeitseffekt können auch Walzen eingesetzt werden, die eine größere Packwirkung, Schneidwirkung oder auch Krümelwirkung erzielen.

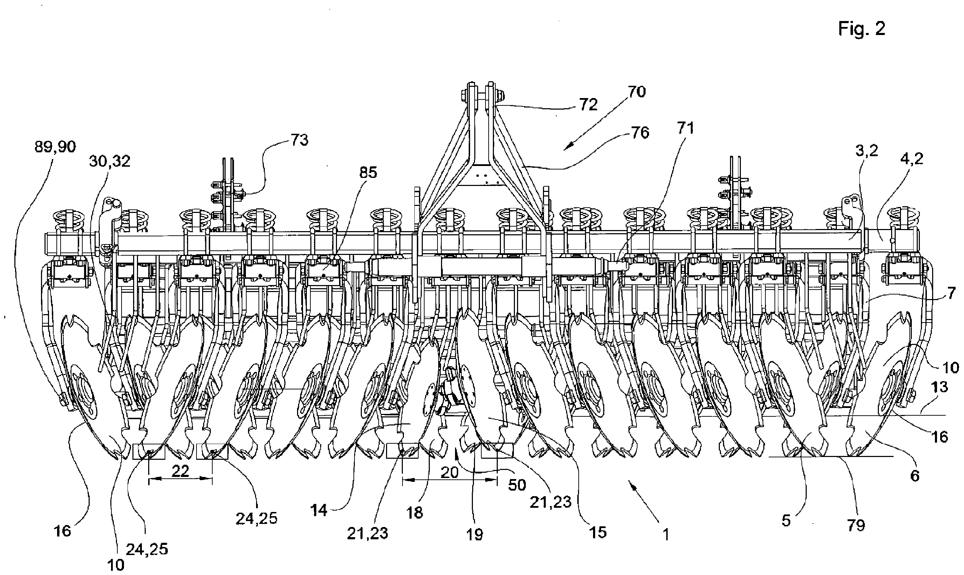

Figur 2 zeigt eine Vorderansicht des Bodenbearbeitungsgerätes 1. Sie verdeutlicht insbesondere, dass die Hohlscheiben 5, 6, 14, 15, 18 und 19 so angeordnet sind, dass der Boden über die gesamte Arbeitsbreite des Bodenbearbeitungsgerätes 1 gleichmäßig bearbeitet wird. Jede der zuvor genannten Hohlscheiben bearbeitet einen Bearbeitungsquerschnitt 23 bzw. 25. Mit 23 sind die Bearbeitungsquerschnitte bezeichnet, die von den Hohlscheiben 14 und 15 bearbeitet werden, die sich im mittleren Bereich 50 des Bodenbearbeitungsgerätes 1 befinden. Mit 25 werden die Bearbeitungsquerschnitte bezeichnet, die von den Hohlscheiben 5 bearbeitet werden, die sich nicht im mittleren Bereich 50 des Bodenbearbeitungsgerätes 1 befinden. Dem jeweiligen Bearbeitungsquerschnitt 23, 25 ist ein Zentrum 21 bzw. 24 zugeordnet. Dabei ist der Abstand 20 zwischen den Zentren 21 von den Bearbeitungsquerschnitten 23 der Hohlscheiben 14 und 15 etwa 1,5 mal größer als der Abstand 22 der Zentren 24 der Bearbeitungsquerschnitte 25. Diese Aufteilung der Hohlscheiben 5 ,14 und 15 bewirkt, dass im mittleren Bereich 50 ein Bearbeitungsstreifen 17 verbleibt, der von den hinteren Hohlscheiben 18 und 19 bearbeitet wird. Alle Hohlscheiben 5 und 6, 14 und 15 und 18 und 19 sind so angeordnet, dass jede Hohlscheibe einen etwa gleich großen Bearbeitungsquerschnitt 23, 25 bearbeitet, wodurch ein gleichmäßiger Bodenbearbeitungseffekt über die gesamte Arbeitsbreite erzielt wird. In der Figur 2 ist auch die Bodenoberfläche 13 angedeutet und auch der Bearbeitungshorizont 79 der Hohlscheiben. Die Differenz der Höhenlage der Bodenoberfläche 13 und des Bearbeitungshorizontes 79 entspricht der Arbeitstiefe der Hohlscheiben 5 und 6.

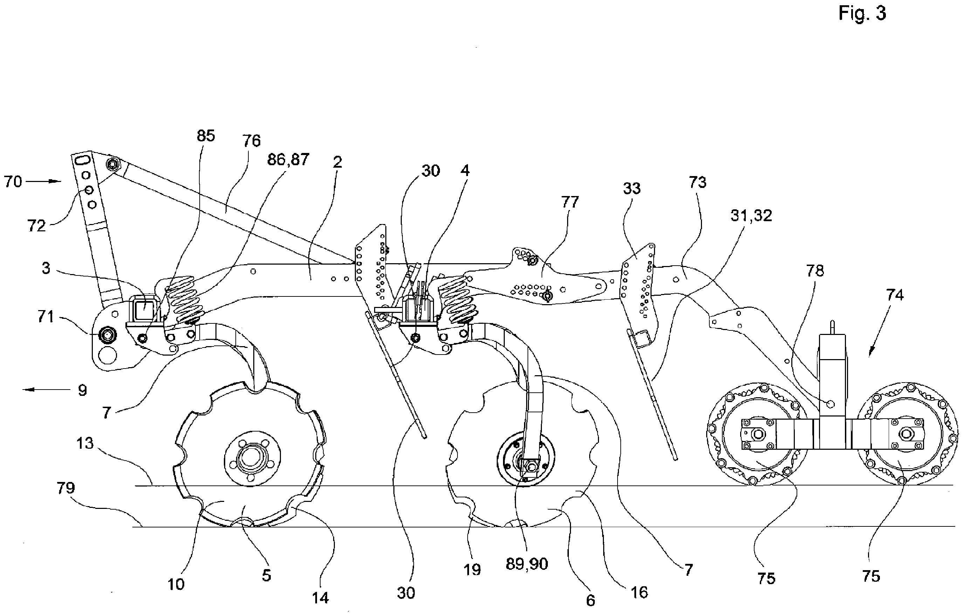

Figur 3 zeigt eine Seitenansicht des Bodenbearbeitungsgerätes 1. Sie verdeutlicht, dass der Dreipunktturm 70 über die Strebe 76 mit dem Rahmen 2 verbunden ist. Auch die Befestigung der Hohlscheiben 5 und 6 mit den Rahmenteilen 3 und 4 über die Achsen 98, Lagerungen 90, Tragarme 7, Schwenkachse 85, Überlastsicherung 87 mit Feder 86 ist der Figur 3 zu entnehmen. Die Niederhalter 30 und 31 mit den Striegelzinken 32 sind so angeordnet, dass sie den Boden, der jeweils durch die Hohlscheiben 5 und 6 aufgeworfen wird, auffangen und auf den Boden ablegen. Die Niederhalter 30 bewirken, dass die Hohlscheiben 6 nicht durch das aufgeworfene Erdreich der Hohlscheiben 5 behindert werden. Die Niederhalter 31 bewirken, dass das von den Hohlscheiben 6 aufgeworfene Erdreich nicht den Lauf der Walze 74 behindert. Angepasst an die jeweilige Funktion sind die Niederhalter 30 und 31 mehr oder weniger dicht zur Bodenoberfläche 13 angeordnet. Die Arbeitstiefe des Bodenbearbeitungsgerätes 1 wird über die Tiefeneinstellung 77 eingestellt. Die Niederhalter 31 bzw. 32 weisen jeweils eine Verstelleinrichtung 33 auf, mit der sie hinsichtlich Winkelstellung und auch Tiefenstellung einstellbar sind.

Figur 4 zeigt eine Vorderansicht einer Hohlscheibeneinheit mit Hohlscheibe 5, 6, 14, 15, 18 oder 19. Sie verdeutlicht, wie die Sehne 12 der konkaven Seite 10 der jeweiligen Hohlscheibe einen stumpfen Winkel α zur Bodenoberfläche 13 bzw. zum Bearbeitungshorizont 79 der Hohlscheiben einschließt. Die jeweilige Hohlscheibe weist eine Achse 89 und Lagerung 90 auf, über die sie mit dem Tragarm 7 verbunden ist. Der Tragarm 7 ist über die Schwenkachse 85 mit dem jeweiligen Rahmenteil 3 bzw. 4 verbunden und wird über die Überlastsicherung 87 mit Feder 86 in Arbeitsstellung gehalten. Die erfindungsgemäße Lösung ist denkbar z. B. mit separat gelagerten Hohlscheiben oder zwei gleich großen Hohlscheiben an einem Tragarm 7. Zusätzlich können auch gemeinsam an einem Tragarm 7 gelagerte Hohlscheiben mit zueinander verstellten Achsen und/oder Hohlscheiben mit unterschiedlichen Durchmessern eingesetzt werden.

Figur 5 zeigt eine Draufsicht der Hohlscheibeneinheit, die die Schrägstellung der jeweiligen Hohlscheibe in Arbeitsrichtung 9 verdeutlicht. Die Hohlschieben 14 und 15, die sich im mittleren Bereich 50 am vorderen Rahmenteil 3 befinden, weisen vorzugsweise einen etwas kleineren Winkel α auf und gegebenenfalls auch einen kleineren Winkel β. Dies bewirkt dann, dass der Erdstrom, der von der Hohlscheibe 14 produziert wird flacher nach hinten geleitet wird. Durch das Versetzen der Hohlscheibe 14 nach hinten muss dort ein Niederhalter 30 geringfügig anders ausgebildet sein. Um einen gleichbleibenden Bodenbearbeitungseffekt in Summe zu erzielen, muss dazu der Winkel α und eventuell auch der Winkel β der Hohlscheibe geringfügig verändert werden. Eine Hohlscheibe 14 mit etwas weniger Wölbung kann einen ähnlichen Effekt erzielen.

## Patentansprüche

1. Bodenbearbeitungsgerät (1) mit einem Rahmen (2) mit zwei hintereinander und quer angeordneten Rahmenteilen (3, 4), an denen nebeneinander separat drehbar gelagerte Hohlscheiben (5, 6) angeordnet sind, die über Tragarme (7) mit den Rahmenteilen (3, 4) verbunden sind, wobei die Hohlscheiben (5) des in Arbeitsrichtung (9) gesehen vorderen Rahmenteiles (3) mit den konkaven Seiten (10) in Arbeitsrichtung (9) schräg nach vorne und nach außen weisen und die Hohlscheiben (6) des in Arbeitsrichtung (9) gesehen hinteren Rahmenteiles (4) mit den konkaven Seiten (10) in Arbeitsrichtung (9) schräg nach vorn und zur Mitte (11) weisen, wobei die Sehnen (12) der konkaven Seiten (10) der Hohlscheiben (5, 6) mit der Bodenoberfläche (13) einen stumpfen Winkel (a) einschließen,
**dadurch gekennzeichnet,**
**dass** zwei der Hohlscheiben (5), und zwar die Hohlscheiben (14, 15) des vorderen Rahmenteils (3), die sich im mittleren Bereich (50) des vorderen Rahmenteils (3) befinden, mit ihren konvexen Seiten (16) zueinander weisen und eine der beiden Hohlscheiben (14, 15) einen um mindestens 20 % kleineren Durchmesser aufweist als die benachbarten Hohlscheiben (5) und die Hohlscheiben (14, 15) links und/oder rechts vom Bearbeitungsstreifen (17) mindestens einer der beiden nachfolgenden Hohlscheiben (6, 18, 19) des hinteren Rahmenteils (4) angeordnet sind, die mit ihren konkaven Seiten (10) zueinander weisen, wobei eine der beiden Hohlscheiben (14, 15) des vorderen Rahmenteils (3) der anderen Hohlscheibe (14, 15) versetzt angeordnet ist und der Versatz zwischen diesen Hohlscheiben so bemessen ist, dass die eine Hohlscheibe (14) vorzugsweise mit ihrer Hinterkante (51) annähernd auf einer Linie (49) liegt mit der Hinterkante (52) der anderen Hohlscheibe (15) bzw. den Hinterkanten der restlichen Hohlscheiben (5) des vorderen Rahmenteils (3).

2. Bodenbearbeitungsgerät nach Anspruch 1,
**dadurch gekennzeichnet,**
**dass** die beiden Hohlscheiben (18, 19), die im mittleren Bereich (26) des hinteren Rahmenteils (4) angeordnet sind, mit ihren konkaven Seiten (10) zueinander weisen und dass eine der beiden Hohlscheiben (18, 19) einen um mindestens 20 % kleineren Durchmesser aufweist als die andere Hohlscheibe und in Arbeitsrichtung (9) zu der anderen Hohlscheibe vorzugsweise nach vorne versetzt angeordnet ist.

3. Bodenbearbeitungsgerät nach Anspruch 2,
**dadurch gekennzeichnet,**
**dass** der Versatz der Hohlscheibe so bemessen ist, dass die Hohlscheibe (19) mit dem kleineren Durchmesser in Draufsicht gesehen mit Ihrer Vorderkante (62) annähernd auf einer Linie (60) liegt mit den Vorderkanten (61) der anderen Hohlscheiben (18, 6).

4. Bodenbearbeitungsgerät nach Anspruch 1,
**dadurch gekennzeichnet,**
**dass** die Sehne (12) der konkaven Seite (10) der im Durchmesser kleineren Hohlscheibe (14) des vorderen Rahmenteils (3) mit der Bodenoberfläche (13) einen stumpfen Winkel (α) einschließt, der kleiner ist als der Winkel (a) der anderen Hohlscheiben (5) des vordern Rahmenteils (3).

5. Bodenbearbeitungsgerät nach Anspruch 1,
**dadurch gekennzeichnet,**
**dass** für breit arbeitende oder einklappbare Bodenbearbeitungsgeräte (1) sowohl das vordere Rahmenteil (3) als auch das hintere Rahmenteil (4) mehrteilig ausgebildet ist.

6. Bodenbearbeitungsgerät nach Anspruch 1,
**dadurch gekennzeichnet,**
**dass** die Anzahl der an dem Bodenbearbeitungsgerät (1) vorgesehenen Hohlscheiben (5, 6, 14, 15, 18, 19) bei einer geraden, nicht durch vier teilbaren Zahl liegt.

7. Bodenbearbeitungsgerät nach Anspruch 1,
**dadurch gekennzeichnet,**
**dass** den Hohlscheiben (5) des vorderen Rahmenteils (3) bzw. der vorderen Rahmenteile (3) und/oder des hinteren Rahmenteils (4) bzw. der hinteren Rahmenteile (4) Niederhalter (30, 31) zugeordnet sind, die hinter den Hohlscheiben (5, 6) angeordnet sind.

8. Bodenbearbeitungsgerät nach Anspruch 7,
**dadurch gekennzeichnet,**
**dass** die Niederhalter (30) als einteilige oder mehrteilige Abschirmelemente ausgebildet sind, die den von den Hohlscheiben (5, 6, 14, 15, 18, 19) abgeschälten Boden aufnehmen und wieder auf die Bodenoberfläche (13) ablegen, wobei die Abschirmelemente vorzugsweise elastisch ausgebildet sind.

9. Bodenbearbeitungsgerät nach Anspruch 7,
**dadurch gekennzeichnet,**
**dass** als Niederhalter (30, 31) bzw. Abschirmelemente Leitteile, Leitbleche, Hauben, Zinken oder zum Beispiel auch Striegelzinken (32) vorgesehen sind, die den in die eine Richtung seitlich verschobenen Boden zumindest zum Teil wieder in die entgegengesetzte Richtung umleiten.

## Claims

1. Soil cultivation implement (1) comprising a frame (2) with two frame parts including a front frame part and a rear frame part (3, 4) positioned in tandem, rotating hollow discs (5, 6) having concave sides are positioned in parallel and are connected to the front and the rear frame parts (3, 4) through support arms (7), the hollow discs (5) of the front frame part (3) seen in a direction of working (9) point obliquely to afront and to an outside with the concave sides (10) in the direction of working (9) and the hollow discs (6) of the rear frame part (4) seen in the direction of working (9) point with the concave sides (10) obliquely to the front and to the centre (11) in the direction of working, whereby the chords (12) of the concave sides (10) of the hollow discs (5, 6) form an obtuse angle (α)with a soil surface (13),
**charcterised in that**
two of the hollow discs (5), namely the two front hollow discs (14, 15) on the front frame part (3), which are located in the middle section (50) of the front frame part (3), point towards each other with their convex sides (16) and one of the two front hollow discs (14, 15) has a diameter that is at least 20% smaller than that of adjacent hollow discs (5) and the front hollow discs (14, 15) are positioned left or right of a cultivation strip (17) of at least one of two following rear hollow discs (18, 19) of the rear frame part (4) that point towards each other with their concave sides, whereby one of the two front hollow discs (14, 15) is positioned offset towards another of the two front hollow discs (14, 15) relative to other discs of the hollow discs on the front frame, and the offset between the two front hollow discs is dimensioned so that a one of the two front hollow discs (14) has a rear edge (51) substantially aligned in a line (49) with a rear edge (52) of the other hollow discs (15) or in line with rear edges of the remaining hollow discs (5) on the front frame part (3).

2. Soil cultivation implement in accordance with claim1,
**charcterised in that**
two rear hollow discs (18, 19) of the hollow discs, which are positioned in a rear middle section (26) of the rear frame part (4), point towards each other with their concave sides (10) and one of the two rear hollow discs (18, 19) has a diameter that is at least 20% smaller than a diameter of the hollow discs and is offset preferably in the direction of working (9) towards the other hollow disc .

3. Soil cultivation implement in accordance with claim 2,
**charcterised in that** the offset of said one of the hollow discs is dimensioned so that said one of the two rear hollow discs (19) with the smaller diameter seen from above is substantially in line (60) with its front edge (62) with the front edges (61) of the other hollow discs (18, 6).

4. Soil cultivation implement in accordance with claim 1,
**charcterised in that** the chord (12) of the concave side (10) of the hollow disc with the smaller diameter (14) forms an obtuse angle (α) with the surface of the soil (13) that is smaller than an angle (α) of the other hollow discs (5) of the front frame part (3).

5. Soil cultivation implement in accordance with claim 1,
**charcterised in that** for wide working with or foldable soil cultivation implements (1) both the front frame part (3) and the rear frame part (4) are devided inseparate parts.

6. Soil cultivation implement in accordance with claim 1,
**charcterised in that** the number of hollow discs (5, 6, 14, 15, 18, 19) arranged in the soil cultivation implement (1) is an even number and not divisible by four.

7. Soil cultivation implement in accordance with claim 1,
**charcterised in that** the hollow discs (5) of the front frame part (3) or the front frame parts (3) or of the rear frame part (4) or the rear frame parts (4) are assigned holding-down devices (30, 31) that are positioned behind hollow discs (5, 6).

8. Soil cultivation implement in accordance with claim 7,
**charcterised in that,**
the holding-down devices (30, 31) are designed as single part or multipart screening elements, which take up soil peeled by the hollow discs (5, 6, 14, 15, 18, 19) and deposit it back on the surface of the soil (13), whereby preferably the screening elements are formed flexibly.

9. Soil cultivation implement in accordance with claim 7,
**charcterised in that,**
the holding-down devices (30, 31) resp. screening elements, guide parts, guideboards, , hoods, tines or for example also harrow tines which at least partially redirect the soil, which has been displaced laterally in one direction, reverse in the opposite direction.

## Revendications

1. Appareil de travail du sol (1) comprenant un châssis (2) avec deux parties de châssis (3, 4) disposées l'une derrière l'autre et transversalement, sur lesquelles sont disposés des disques creux (5, 6) montés séparément et rotatifs l'un à côté de l'autre, qui sont reliés aux parties du châssis (3, 4) par des bras supports (7), les disques creux (5) de la partie avant du châssis (3), vus dans la direction de travail (9), les côtés concaves (10) étant orientés obliquement vers l'avant et vers l'extérieur dans la direction de travail (9) et les disques creux (6) de la partie arrière du châssis (4), vus dans la direction de travail (9), les côtés concaves (10) étant orientés en avant et vers le centre (11) dans la direction de travail (9), dans laquelle les cordes (12) des côtés concaves (10) des disques creux (5, 6) comprennent un angle obtus (a) avec la surface de soil (13),
**caractérisé en ce que**
deux des disques creux (5), à savoir les disques creux (14, 15) de la partie avant du châssis (3), qui sont situés dans la zone centrale (50) de la partie avant du châssis (3), se font face avec leurs côtés convexes (16) et un des deux disques creux (14, 15) a un diamètre qui est au moins 20% inférieur à celui des disques creux voisins (5) et les disques creux (14, 15) ont au moins un des deux disques creux (6) suivants à gauche et/ou à droite du 18, 19) de la partie arrière du châssis (4) sont disposés, dont les côtés concaves se font face, l'un des deux disques creux (14, 15) de la partie avant du châssis (3) étant décalé par rapport à l'autre disque creux (14, 15) et le décalage entre ces disques creux étant dimensionné de telle sorte qu'un disque creux (14) repose de préférence avec son bord arrière (51) approximativement sur une ligne (49) avec le bord arrière (52) de l'autre disque creux (15) ou les bords arrière des autres disques creux (5) de la partie avant du châssis (3).

2. Appareil de travail du sol selon la revendication 1,
**caractérisé en ce que**
les deux disques creux (18, 19) disposés dans la zone centrale (26) de la partie arrière du châssis (4) sont dirigés l'un vers l'autre de leurs côtés concaves (10) et **en ce que** l'un des deux disques creux (18, 19) présente un diamètre au moins 20% inférieur à celui de l'autre disque creux et est disposé de préférence en décalage vers l'avant en direction du travail (9) par rapport à l'autre disque creux.

3. Appareil de travail du sol selon la revendication 2,
**caractérisé en ce que**
le décalage du disque creux est dimensionné de telle sorte que le disque creux (19) de diamètre inférieur, vu en plan, repose approximativement sur une ligne (60) avec les bords avant (61) des autres disques creux (18, 6) avec son bord avant (62).

4. Appareil de travail du sol selon la revendication 1,
**caractérisé en ce que**
la corde (12) du côté concave (10) du disque creux (14), de diamètre inférieur, de la partie avant du châssis (3) forme un angle obtus (a) avec la surface de soil (13) qui est plus petit que l'angle (a) des autres disques creux (5) de la partie avant du châssis (3).

5. Appareil de travail du sol selon la revendication 1,
**caractérisé en ce que**
la partie avant (3) et la partie arrière (4) du châssis sont conçues en plusieurs parties pour des appareil de travail du sol larges ou repliables (1).

6. Appareil de travail du sol selon la revendication 1,
**caractérisé en ce que**
le nombre de disques creux (5, 6, 14, 15, 18, 19) prévus sur l'appareil de travail du sol (1) est un nombre pair qui ne peut être divisé par quatre.

7. Appareil de travail du sol selon la revendication 1,
**caractérisé en ce que**
les disques creux (5) de la partie avant du châssis (3) ou des parties du châssis avant (3) et/ou de la partie arrière du châssis (4) ou des parties arrière du châssis (4) sont affectés des dispositifs de retenue (30, 31) qui sont disposés derrière les disques creux (5, 6).

8. Appareil de travail du sol selon la revendication 7,
**caractérisé en ce que**
les dispositifs de retenue (30) sont réalisés sous la forme d'éléments de blindage d'une ou plusieurs pièces, qui reçoivent le soil pelé des disques creux (5, 6, 14, 15, 18, 19) et le déposent à nouveau sur la surface de soil (13), les éléments de blindage étant de préférence de forme élastique.

9. Appareil de travail du sol selon la revendication 7,
**caractérisé en ce que**
des dispositifs de retenue, des tôles de guidage, des capots, des dents ou, par exemple, des dents d'un herse (32) sont prévus en tant que dispositifs de retenue (30, 31) ou éléments de blindage, qui réorientent au moins partiellement le sol, qui est déplacé latéralement dans une direction, dans la direction opposée.
